# EUROPÄISCHE PATENTSCHRIFT

(11) **EP 1 198 795 B1**
(45) Veröffentlichungstag und Bekanntmachung des Hinweises auf die Patenterteilung: **01.09.2004**
(21) Anmeldenummer: 00943961.3
(22) Anmeldetag: 30.06.2000
(51) Int. Cl.: G11B 23/107, G11B 23/04

(54) **MAGNETBANDKASSETTE, INSBESONDERE EINE EINSPULENKASSETTE FÜR DIE DATENVERARBEITUNG MIT MEHRTEILIGEM BREMSSYSTEM**
MAGNETIC TAPE CASSETTE, ESPECIALLY A SPOOLING CASSETTE FOR PROCESSING DATA, WITH A MULTI-PART BRAKING SYSTEM
CASSETTE DE BANDE MAGNETIQUE, EN PARTICULIER CASSETTE A UNE SEULE BOBINE POUR LE TRAITEMENT DE DONNEES, DOTEE D'UN SYSTEME DE FREINAGE EN PLUSIEURS PARTIES

(30) Priorität: 03.07.1999 DE 19930802
(43) Veröffentlichungstag der Anmeldung: 24.04.2002
(73) Patentinhaber: EMTEC Magnetics GmbH, 77731 Willstätt (DE)
(72) Erfinder: SCHOETTLE, Klaus, F-67000 Strasbourg (FR); KUENSTNER, Matthias, D-77797 Ohlsbach (DE); HUMMEL, Edgar, D-77694 Kehl (DE)
(86) Internationale Anmeldenummer: PCT/EP2000/006157
(87) Internationale Veröffentlichungsnummer: WO 2001/003137

(56) Entgegenhaltungen:
- EP-A- 0 284 687
- EP-A- 0 926 676
- US-A- 5 901 916

## Beschreibung

Die Erfindung betrifft eine Kassette für bandförmige magnetische Aufzeichnungsträger, vorzugsweise eine Einspulenkassette für Datenbänder mit mehrteiligem Bremssystem.

Kassetten dieser Art bestehen aus wenigstens
- einem Gehäuse, das mit Ausnahme einer Ecke winkelig ausgebildet ist, wobei das Gehäuse zwei Gehäuseteile mit Boden-, Deckel und Seitenwänden umfaßt und die Gehäuseteile miteinander verschweißt oder verschraubt sind
- einer Bandspule, bestehend aus einer Nabe, von deren Enden radiale obere und untere Flansche abstehen, wobei der Nabenboden die Antriebs- und Bremsverzahnung aufweist und mit auf der Nabe aufgewickeltem Magnetband (nicht dargestellt), an dessen freiem Ende ein Führungselement angebracht ist, mit dessen Hilfe das Magnetband zur Aufwickelspule geführt und auf dieser aufgewickelt wird, und
- einer Spulenbremse, die an ihrer Oberseite über Verbindungselemente mit der Gehäusedeckelwand axial verschiebbar, aber gegen Verdrehen und radiale Lageveränderungen gesichert, verbunden ist, deren Verzahnung in die Bremsverzahnung der Bandspule eingreift und so auch die Bandspule gegen Verdrehen sichert und durch die Wirkung der Feder gleichzeitig gegen das Gehäuseunterteil drückt, wenn die Antriebsnabe des Gerätes nicht in Eingriff ist.

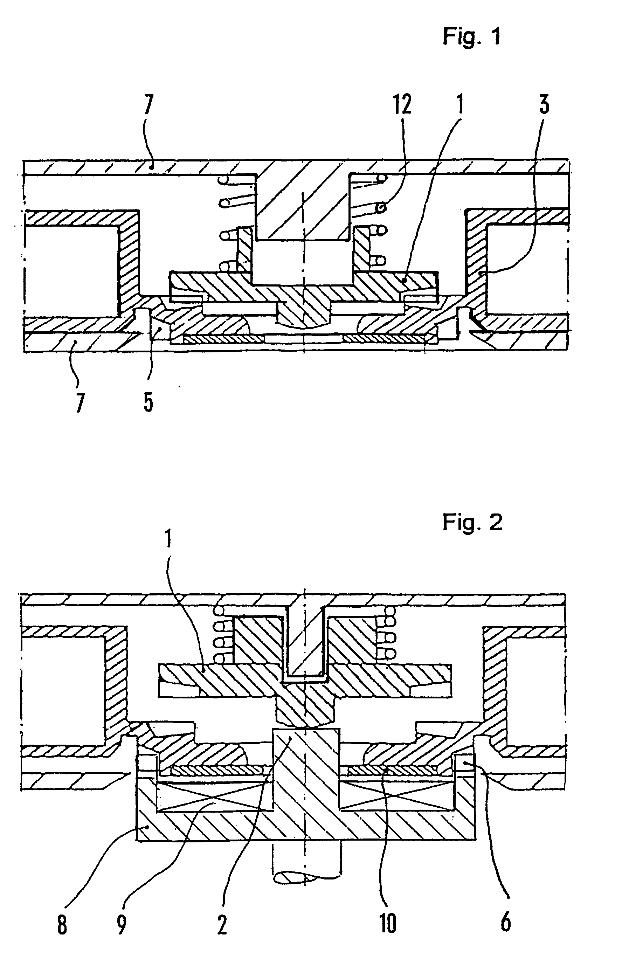

Die bei Einspulenkassetten allgemein gebräuchliche Spulenbremse (1) wird, wie in Fig. 1 und Fig. 2 dargestellt, geräteseitig durch einen Stift (2) mit verschleißfester Oberfläche direkt ausgelöst. Da die Oberfläche dieses Stiftes etwas über die Ebene der Verzahnung (6) der Antriebsnabe oder des Wickeldorns (8) herausragt, wird beim Laden der Kassette in das Laufwerk durch den Wickeldorn zunächst die Spulenbremse (1) gegen die Kraft der Feder (12) angehoben. Erst danach greift durch die Kraftwirkung zwischen geräteseitigem Magnet (9) und in den Nabenboden der Bandspule(3) eingelassener Metallplatte (10) die Verzahnung (6) des Wickeldornes (8) in die Antriebsverzahnung (5) der Bandspule(3) ein und die Bandspule (3) wird vom Gehäuseboden (7) aus ihrer ersten Lage, der Ruhelage, in ihre zweite Lage, die Betriebslage, die in Fig. 2 dargestellt ist, angehoben.

EP 0 284 687 A beschreibt eine Einspulenkassette mit verbesserter Zentrierung der Spulenbremse bezüglich der Bandspule, wobei über den Umfang der zylindrischen Innenfläche der Bandspulennabe Rippen oder Vorsprünge angebracht sind, an welchen der Außendurchmesser des scheibenförmigen Mittelteils der Spulenbremse, sowohl bei der Montage der Kassette als auch beim Lüften der Spulenbremse während des Betriebs geführt wird.

Diese Art von Bremssystemen hat unter anderem den Nachteil, dass sich sowohl der erforderliche Hub zum Lösen der Spulenbremse als auch der Hub zum Anheben der Bandspule aus ihrer ersten Lage in ihre zweite Lage addiert und somit die Untergrenze der Kassettenhöhe und Gerätebauhöhe begrenzt.

EP 0 926 676 A beschreibt eine Einspulenkassette mit zweiteiligem Bremssystem, wobei das von der geräteseitigen Antriebsnabe betätigte erste Teil des Bremssystems am Umfang seines scheibenförmigen Mittelabschnitts eine in Richtung geräteseitige Antriebsnabe weisende, umlaufende kreisringförmige Erhebung besitzt, welche in eine kreisringförmige, umlaufende Nut, die sich im Bereich der Bandspulennabenöffnung befindet, hineinragt und wobei die umlaufende kreisförmige Erhebung mit der umlaufenden kreisförmigen Nut auch über den zum Lösen der Spulenbremse notwendigen Hub des Bremssystems in Überdeckung bleibt, und die Kassette so gegen das Eindringen von Staub und Schmutz durch die Bandspulennabenöffnung geschützt ist.

Die technische Entwicklung erfordert jedoch seit einiger Zeit Kassetten mit immer höherer Speicherdichte und dabei immer kleineren Gehäuseaußenabmessungen.

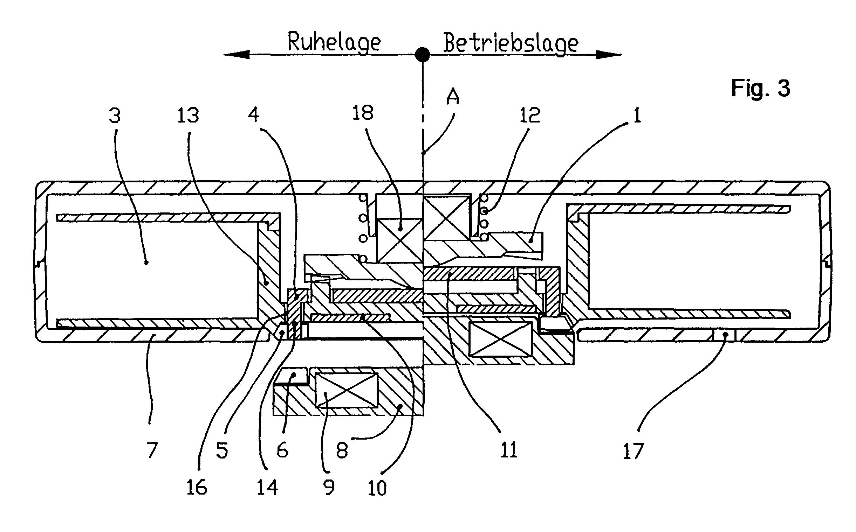

Der Anmelderin ist ein Bremssystem bekannt, das dieser Forderung Rechnung trägt. Dieses System ist in Fig.3 dargestellt und schlägt ein zweiteiliges Bremssystem vor, wobei das erste Element der herkömmlichen Spulenbremse (1) entspricht und das zweite Element eine Mitnehmerscheibe (4) darstellt, bestehend aus einer dünnen Platte (11), die innerhalb der Nabe (13) axial verschiebbar und mit drei am Umfang gleichmäßig verteilten Füßen (14), die durch Ausnehmungen (16) im Bereich der Antriebsverzahnung(5) durch den Nabenboden der Bandspule (3) hindurchragen. Das Lösen der Spulenbremse (1) von der Bandspule (3) in der Betriebslage(zweite Lage) erfolgt nun über diese Mitnehmerscheibe (4), die im gleichen Maße in der Bandspule angehoben wird, wie die Verzahnung (6) der Antriebsnabe (8) in die Antriebsverzahnung (5) der Bandspule (3) eingreift, wenn die Kräfte des Magnets (9) auf die in der Bandspule (3) befestigte Metallplatte (10) wirken.

Nachteilig an dieser Anordnung ist, daß eine einwandfreie Funktion nur dann gegeben ist, wenn die Toleranzen zwischen Mitnehmerscheibe(4) und Ausnehmungen(16) der Bandspule(3) in den entsprechenden Bereichen hinreichend großsind. Daraus resultiert sowohl radiales als auch tangentiales Spiel und somit eine Beweglichkeit zwischen Mitnehmerscheibe (4)und Bandspule (3).

Da die Bandspule (3) im Betrieb ständig Richtungswechsel und Beschleunigungen erfährt, greifen an der Mitnehmerscheibe (4) Trägheitskräfte an, welche die Mitnehmerscheibe (4) innerhalb der Toleranzen in der Bandspule (3) hin und her schlagen lassen.

Ein anderer Nachteil der bekannten Kassetten ist in der Ausgestaltung der Kontaktflächen zwischen Spulenbremse (1) und Mitnehmerscheibe (4) zu sehen. Ein ausreichend genauer Rundlauf der Bandspule (3) kann nur dann erreicht werden, wenn die Referenzaufnahmeöffnungen (17) zur Lagefixierung der Kassette im Gerät und die Zentrierung (A) der Bandspule (3) zur Zentrierung der Spulenbremse (1) innerhalb relativ geringer Toleranzen liegen. So ist es beispielsweise möglich, daß sich die Kontaktfläche der Spulenbremse (1) im Laufe der Zeit wegen der radialen Beweglichkeit der Mitnehmerscheibe (4) innerhalb der Bandspule (3) an verschiedenen Stellen in die Oberfläche der Mitnehmerscheibe (4) einarbeiten kann, was noch durch Unterschiede der Lagefixierung beim Abspielen der Magnetbandkassette in verschiedenen Geräten verstärkt werden kann. Dadurch können exzentrische Zentrierungen zwischen Spulenbremse (1) und Mitnehmerscheibe (4) entstehen, die bei jeder Umdrehung unerwünschte Radialbewegung eines oder beider Teile (1, 4) in ihren Führungen hervorrufen. Ein weiterer Nachteil herkömmlicher Bremssysteme ist die Tatsache, daß die Spulenbremse (1) zu Taumelbewegungen neigt, wenn sich Planlauffehler der Bandspule, die durch Toleranzen, die sowohl vom Gerät als auch von der Bandspule selbst herrühren und entsprechend großes Spiel in den Elementen der Verdrehsicherung der Spulenbremse (1) überlagern.

Des weiteren kann sich die dünne Platte(11) der Mitnehmerscheibe (4) bei der Übertragung der Kraft der Feder (12) durch die Spulenbremse (1) auf die am Außenumfang der Platte (11) angeordneten Füße (14) durchbiegen und so den Bremsaushebeweg reduzieren.

Als Folge hiervon treten Laufgeräusche, Abrieb an der Antriebsverzahnung (6), und/oder Mitnehmerscheibe (4) und/oder Kassettengehäuse auf.

Abrieb im allgemeinen erzeugt Dropouts auf dem bandförmigen Aufzeichnungsträger. Abrieb an der Mitnehmerscheibe (4) und an der Verzahnung (5) verursacht Maßveränderungen an den betroffenen Teilen und kann in extremer Form den Bremsaushebeweg reduzieren und somit die Kassette funktionsunfähig machen.

Da sowohl Laufgeräusche als auch Abrieb für hochwertige digitale Datenspeichersysteme nicht tragbar sind, bestand die Aufgabe das Bremssystem so zu verbessern, daß die zuvor beschriebenen Nachteile, wie eingeschränkte Funktionssicherheit und Laufgeräusche durch unzulässige Beweglichkeit der Kassttenbestandteile und hohe Dropout-Rate durch Abrieb, beseitigt werden.

Die Aufgabe wurde erfindungsgemäß gelöst durch eine Magnetbandkassette, bestehend aus einem im wesentlichen rechteckigen Gehäuse, mindestens einer darin drehbar gelagerten Bandspule, auf der Magnetband aufgewickelt ist, und einem mehrteiligen Bremssystem, wobei mindestens ein Teil(40) im Zentrum der Bandspule (30) und mindestens einzweites Teil (100) abgefedert an einer Gehäusewand, jeweils verdrehsicher und axial verschiebbar, gelagert ist und wobei ein erstes Teil (40) geräteseitig von einer Ruhelage in eine Betriebslage angehoben wird und so ein zweites Teil (100) gegen die Wirkung der Kraft der Feder (12) aus seiner formschlüssigen Verbindung mit der Bandspule (30) trennt und daß mindestens ein Teil elastische Mittel (106, 408) besitzt, mit denen es wenigstens in der Betriebslage an entsprechenden Führungsmitteln (313a, 313b, 703) der Bandspule und/oder des Kassettengehäuses lösbar fixiert ist.

Die Erfindung wird nun anhand der Zeichnungen näher erläutert und zwar zeigen:
- Fig. 1:: Einen Querschnitt durch eine herkömmliche Spulenbremse, die sich in Ruhelage in einer Kassette außerhalb des Gerätes befindet.
- Fig. 2:: Einen Querschnitt durch eine herkömmliche Spulenbremse, die sich in Betriebslage in einer Kassette innerhalb des Gerätes befindet, wobei die Schnittdarstellung gegenüber Fig.1 um 90° gedreht ist.
- Fig. 3:: Einen Querschnitt durch eine Einspulenkassette mit zweiteiligem Bremssystem in Ruhe- und Betriebslage.
- Fig. 4:: Einen Querschnitt durch ein zweiteiliges, erfindungsgemäßes Bremssystem in Ruhe- und Betriebslage.
- Fig. 5:: Eine Explosionsdarstellung des erfindungsgemäßen Bremssystems.
- Fig. 6:: Eine isometrische Darstellung einer erfindungsgemäßen Mitnehmerscheibe

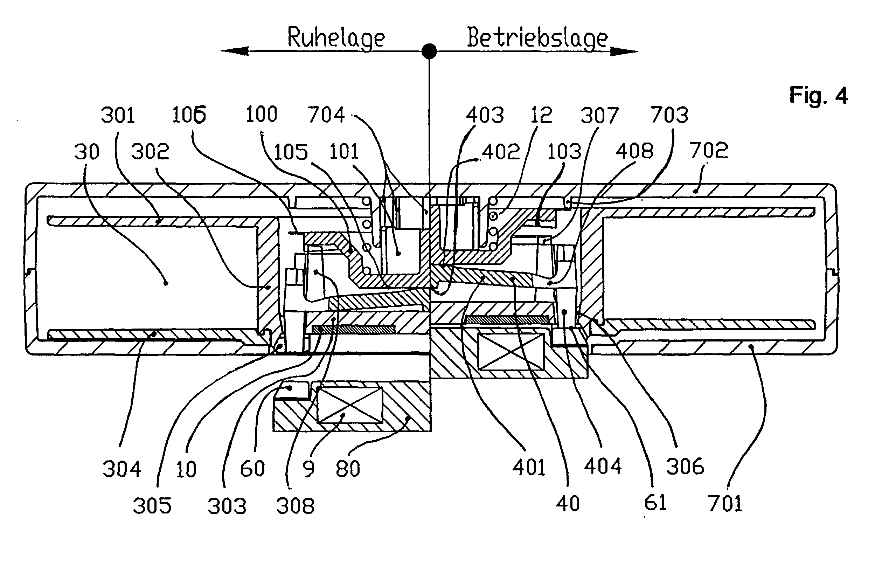

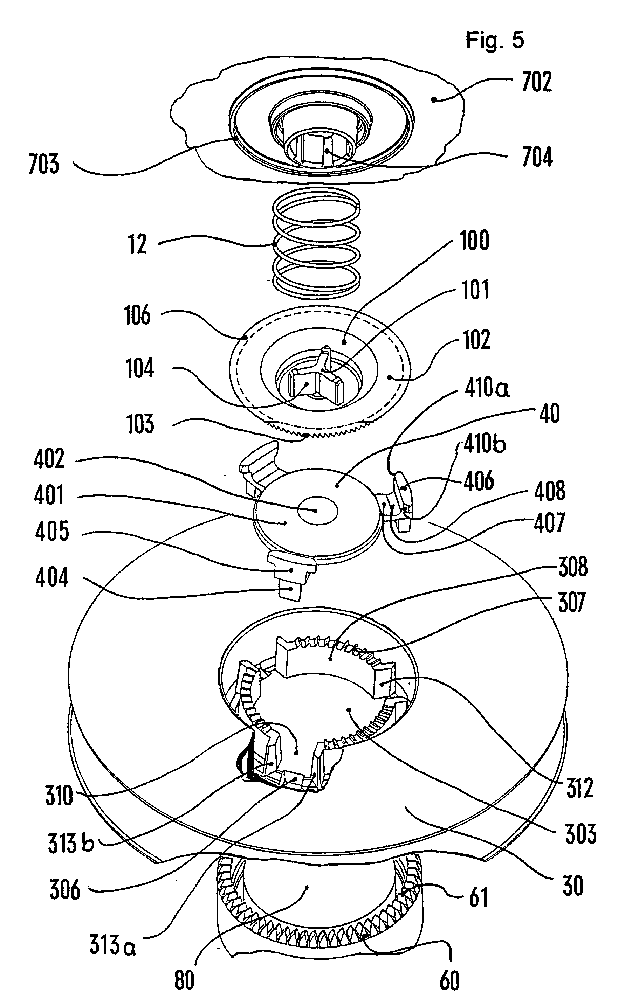

Das erfindungsgemäßes Bremssystem ist in Fig. 4 in einem Querschnitt und in Fig. 5 in einer Explosionsdarstellung gezeigt. Der Einfachheit halber wurde in Fig. 4 die erste und zweite Lage der Bandspule in einer Abbildung dargestellt. Der linke Teil der Abbildung zeigt einen Querschnitt durch die Magnetbandkassette mit in einer Ruhelage befindlichen Bandspule (30) deren Bremsverzahnung (307) in Eingriff mit der Bremsverzahnung (103) der Spulenbremse (100) ist. Der rechte Teil der Abbildung zeigt einen Querschnitt durch die Magnetbandkassette mit einer in Betriebslage befindlichen Bandspule (30) deren Bremsverzahnung (307) von der Bremsverzahnung (103) der Spulenbremse (100) gelöst ist.

Die Bandspule (30) besteht im wesentlichen aus zwei miteinander verbundenen Teilen, dem Wickelteller (301) mit Nabe (302) und Nabenboden (303), in den eine Metallscheibe (10) eingelassen ist und dem Flansch (304), wobei auf die Nabe (302) der Datenträger, vorzugsweise ein bandförmiger Aufzeichnungsträger, aufgewickelt ist (nicht dargestellt).

Die dem Gehäuseunterteil (701) und somit der Antriebsnabe oder dem Wickeldorn (80) zugewandte Seite des Nabenbodens (303) weist die Antriebsverzahnung (305) auf, während die Bremsverzahnung (307) auf einem im wesentlichen ringförmigen Steg (308) der dem Gehäuseoberteil (702) zugewandten Seite des Nabenbodens (303) angebracht ist. Der Nabenboden (303) weist innerhalb des Bereiches der Antriebsverzahnung (305) mindestens drei Ausnehmungen (306) auf, durch welche die T-förmig ausgebildeten Füße (404) der Mitnehmerscheibe (40) hindurchragen. Unter gleicher Teilung, fluchtend zu diesen Ausnehmungen (306) sind auch im ringförmigen Steg (308) Ausnehmungen (310), die von der Bremsverzahnungsoberkante bis zur Oberseite des Nabenbodens (303) reichen, angebracht. Diese Ausnehmungen (310) weisen Führungsmittel (313a, 313b) auf, die so gestaltet sind, daß sie im Zusammenspiel mit den T-förmig ausgebildeten Füßen (404) der Mitnehmerscheibe (40) mindestens in der Betriebslage die radiale und tangentiale Spielfreiheit der Mitnehmerscheibe (40) innerhalb der Bandspule (30) gewährleisten.

Die Spulenbremse (100) besteht im wesentlichen aus einer Nabe (101), wobei die der Mitnehmerscheibe (40) gegenüberliegende Fläche (105), zumindest im Bereich der Kontaktfläche (402) der Mitnehmerscheibe (40) plan ist und einem daran angrenzenden, mehrfach gekröpftem Flansch (102), dessen untere Stirnseite ebenfalls eine Bremsverzahnung (103) aufweist. Die Nabe (101) der Spulenbremse ist mittels gleichmäßig angeordneter radialer Rippen (104) in entsprechenden Führungen (704) des Gehäuseoberteils (702) verdrehsicher und axial verschiebbar gelagert. Die Spulenbremse (100) selbst stützt sich über die Vorspannung der Feder (12) am Gehäuseoberteil (702) ab und wird somit an die Mitnehmerscheibe (40) gedrückt.

In der Ruhelage der Bandspule (30) ist die Unterkante der durch den Nabenboden (303) ragenden T-förmig ausgebildeten Füße (404) der Mitnehmerscheibe (40) mit der durch die Zahnköpfe der Antriebsverzahnung (305) gebildeten Ebene bündig, die Mitnehmerscheibe (40) liegt auf dem Nabenboden (303) der Bandspule(30) zumindest teilweise auf, die Spulenbremse (100) wird mittels der Feder (12) gegen die Mitnehmerscheibe (40) gedrückt so daß Bremsverzahnung (103) der Spulenbremse und Bremsverzahnung (307) der Bandspule miteinander in Eingriff sind und die Bandspule (30) somit gegen Drehbewegung gesichert ist. Dabei kann, wie in Fig. 5 gezeigt, die Zähnezahl der Bremsverzahnung (103) der Spulenbremse (100) zur vereinfachten Fertigung bei gleicher Teilung um ein ganzzahliges Vielfaches grösser sein als die Zähnezahl der Bremsverzahnung (307) der Bandspule (30).

Zum Erreichen der Betriebslage der Bandspule (30) wird die Antriebsnabe (80) des Gerätes ausgefahren. Hierbei greifen zunächst die Antriebsverzahnung(60) der Antriebs nabe (80) und die Antriebsverzahnung (305) der Bandspule (30) ineinander. Die im Bereich der Ausnehmungen (306) im Nabenboden (303) der Bandspule (30) hindurchragenden T-förmig ausgebildeten Füße (404) der Mitnehmerscheibe (40) werden durch die Zahnköpfe (61) der Antriebsverzahnung (60) der Antriebsnabe (80) angehoben und die Mitnehmerscheibe (40) schiebt gegen den Widerstand der Feder (12) die Spulenbremse (100) in Richtung Gehäuseoberteil (702), so daß die Bremsverzahnung (103) der Spulenbremse und die Bremsverzahnung (307) der Bandspule außer Eingriff kommen und die Bandspule (30) nunmehr frei drehbeweglich ist. Durch die Kraftwirkung zwischen geräteseitigem Magnet (9) und in den Nabenboden (303) der Bandspule (30) eingelassener Metallplatte (10) ist die Bandspule (30) in ihrer Betriebslage fixiert.

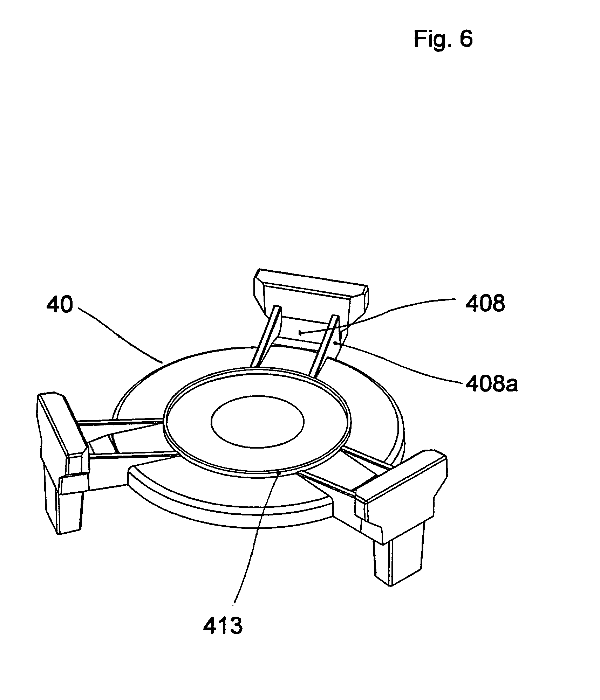

Die Mitnehmerscheibe (40) besteht im wesentlichen aus einer kreisrunden Mittelplatte (401), deren Querschnitt aus Versteifungsgründen vorzugsweise kegelförmig ausgebildet ist und wobei die Plattenoberseite im Zentralbereich, der die Kontaktfläche (402) zur Spulenbremse (100) bildet, abgerundet ist, während die Plattenunterseite eine Erhebung (403), vorzugsweise im Zentralbereich der Mittelplatte (401), die die vertikale Anlage durch die Anziehung zwischen geräteseitigem Magnet (9) und in den Nabenboden (303) der Bandspule (30) eingelassenen des Mit-Nehmerscheibe (10) zum Nabenboden (303) hin definiert, aufweist. An der Plattenoberseite ist zusätzlich, wie in Fig. 6 dargestellt, eine kreisringförmige Erhebung (413) angebracht, welche unerwünschte Kippbewegungen der Spulenbremse (100) gegenüber der Mitnehmerscheibe (40) verhindert. Gleichmäßig über den Umfang der Mittelplatte (401) verteilt, sind mehrere, vorzugsweise drei, T-förmig ausgebildete, sich in axialer Richtung erstreckende Füße (404), bestehend aus Steg (405) und T-Balken (406), angebracht, die mittels radialer Verbindungselementen (407), die vorzugsweise in der Mitte der Füße (404) angreifen, mit der Mittelplatte (401) verbunden sind. Die Breite des Stegs (405) ist etwas geringer als die Breite der entsprechende Ausnehmung (310) im ringförmigen Steg (308) der Bandspule (30), während die Breite des T-Balkens (406) größer ist als die Stegbreite (405). Die T-Balken (406) der Füße (404) der Mitnehmerscheibe (40) sind so ausgebildet, daß sie vorzugsweise an den Enden einander entgegengesetzt, vorzugsweise zur Mittenachse hin und schräg verlaufende flächige Führungsmittel (410a, 410b) aufweisen, die an entsprechend abgeschrägten Führungsmitteln (313a, 313b) der Bandspule (30) gleitend geführt werden. Die Verbindungselemente (407) sind so ausgestaltet, daß sie am Übergang zu den T-förmig ausgebildeten Füßen (404) der Mitnehmerscheibe (40) eine Querschnittsschwächung (408), welche die Biegesteifigkeit des Verbindungselements (407) gezielt reduziert, aufweisen. Die Ausführungsform der Querschnittsschwächung (408) ist abhängig vom Elastizitätsmodul des für die Mitnehmerscheibe (40) verwendeten Werkstoffs. Bei Verwendung von Werkstoffen mit niedrigem Elastizitätsmoduls kann unter Umständen das Anbringen von Aussteifungen (408a) erforderlich sein, um eine zu große Nachgiebigkeit des Verbindungselements (407) zu verhindern.

Wie bereits erwähnt, ist die Bremsverzahnung (307) der Bandspule (30) auf einem im wesentlichen ringförmigen Steg (308), der auf der dem Gehäuseoberteil (702) zugewandten Seite des Nabenbodens (303) liegt, angebracht. Vorgegeben durch die Anzahl der Füße (404) der Mitnehmerscheibe (40) wird dieser im wesentlichen ringförmige Steg (308) durch Ausnehmungen (310), durch die die Verbindungselemente (407) hindurchragen, in vorzugsweise drei Segmente unterteilt. Die Breite dieser Ausnehmungen (310) ist so gewählt, daß die Verbindungselemente (407) genügend Abstand zu den stirnseitigen Endflächen(312) der Segmente haben.
Die stirnseitigen Endflächen (312) der einzelnen Segmente sind radial nach außen hin verlängert und sind als auf dem Nabenboden (303) senkrecht stehende, vorzugsweise an den Enden einander entgegengesetzt und vorzugsweise zur Mittenachse schräg verlaufende, flächige Führungsmittel (313a, 313b) ausgebildet, die zu den entsprechenden Führungsmitteln (410a, 410b) der Füße (404) der Mitnehmerscheibe (40) korrespondieren.

Anstelle der flächigen Berührung der Führungsmittel (313a, 313b, 410a, 410b) können auch andere Berührungsarten, wie beispielsweise Punktberührung, gewählt werden.

Die Funktion der Mitnehmerscheibe (40) wird nun im einzelnen unter Bezugnahme der Abbildungen in Fig. 4 und Fig. 5 beschrieben.

Befindet sich die Magnetbandkassette in Ruhelage, d.h. die Antriebsnabe (80) des Gerätes ist nicht ausgefahren, so ist die Bandspule (30) in ihrer ersten Lage. Wie aus dem linken Teil der Abbildung in Fig.4 ersichtlich, liegt die Mitnehmerscheibe (40) mit ihrer Erhöhung (403) und den Verbindungselementen (407) zumindest teilweise auf dem Nabenboden (303) auf. In dieser Ruhelage, wenn keine äußeren Kräfte auf die Kassette wirken, ist der Spalt zwischen den als Flächen ausgeführten Führungsmitteln (410a, 410b) der Füße (404) der Mitnehmerscheibe (40) und den als Flächen ausgeführten Führungsmitteln (310a, 310b) der Bandspule (30) vorzugsweise > 0,1 mm. Wird nun die Antriebsnabe (80) des Gerätes ausgefahren bis sich der geräteseitige Magnet (9) und die in den Nabenboden (303) der Bandspule (30) eingelassene Metallplatte (10) gegenseitig anziehen, so berühren die Zahnspitzen (61) der Antriebsverzahnung (60) zunächst die Füße (404) der Mitnehmerscheibe(40). Mit zunehmendem Hub der Antriebsnabe (80) werden die Füße (404) der Mitnehmerscheibe (40) in Richtung Gehäuseoberteil (702) gedrückt, die Mitnehmerscheibe(40) schiebt gegen den Widerstand der Feder (12) die Spulenbremse (100) in Richtung Gehäuseoberteil (702), so daß die Bremsverzahnung (103) der Spulenbremse (100) und die Bremsverzahnung (307) der Bandspule (30) außer Eingriff kommen und die Bandspule (30) nunmehr frei drehbeweglich ist. Durch die während dieser Vorgangs stetig steigende Federkraft, die sich von der Mitnehmerscheibenmitte über die Mittelplatte (401) und die Verbindungselemente (407) auf die Füße (404) verteilt, wird auf die Verbindungselemente (407) ein Biegemoment ausgeübt, das die Füße (404) der Mitnehmerscheibe (40) aufgrund der Querschnittsschwächung (408) in Richtung Mitnehmerscheibenmitte kippen läßt, so daß die Führungsmittel (410a, 410b) des oberen T-Balkens (406) der Füße (404) der Mitnehmerscheibe (40) und die entsprechenden Führungsmittel (313a, 313b) der Bandspule (30) miteinander zur Anlage kommen, womit eine radiale und tangentiale Spielfreiheit der Mitnehmerscheibe (40) in der Bandspule (30) gewährleistet ist.

Im Rahmen der Erfindung können auch die Führungsmittel (410a, 410b) der Mitnehmerscheibe (40) und die Führungsmittel (313a, 313b) der Bandspule (30) bereits in der Ruhelage mit einer gewissen Vorspannung der Füße (404) der Mitnehmerscheibe (40) zur gegenseitigen Anlage kommen.

Diese Vorspannung erhöht sich dann durch den zuvor beschriebenen Vorgang bei Einrücken der Antriebsnabe (80) in die Betriebslage.

In jedem Fall muß die Summe aus den durch die elastische Fixierung entstehenden Reibungskräften zwischen den Führungsmitteln (313a, 313b) und (410a, 410b) der Bremsteile (40, 100), den Rippen (104) und den Führungen (704), dem elastischen Federelement (106) und der umlaufenden Gehäuserippe (703) von Bremsteil (100) und Gehäuseoberteil (702) sowie zwischen den Kontaktflächen (105, 402) von Bremsteil (100) und Mitnehmerscheibe (40) kleiner sein, als die auf das Bremsteil (100) wirkende minimale Kraft der Feder (12).

Deshalb und zur Vermeidung von Rotationsreibung und/oder Verschleiß zwischen Spulenbremse (100) und Mitnehmerscheibe (40) ist es vorteilhaft, daß die Spulenbremse (100) und/oder die Mitnehmerscheibe (40) aus einem verschleißbeständigen Kunststoff, wie beispielsweise Polyamid 6.6 oder POM bestehen, wobei zumindest dem verschleißbeständigen Kunststoff eines Teils (40, 100), mit mindestens einem die Reibung senkenden Zusatz, wie z. B. Molybdändisulfid, Teflon und/oder anderen Gleitmitteln, versetzt ist.

Ein weiterer Vorteil der Erfindung geht aus der besonderen Ausgestaltung der Kontaktflächen (105, 402) von Spulenbremse (100) und Mitnehmerscheibe (40) hervor. Wie bereits zuvor beschrieben ist die der Mitnehmerscheibe (40) gegenüberliegende Fläche (105) der Spulenbremse (100) zumindest im Bereich der Kontaktfläche (402) der Mitnehmerscheibe (40) plan ausgeführt, wogegen die Kontaktfläche (402) der Mitnehmerscheibe (40) abgerundet ist. Dies hat zur Folge, daß sich bei Verschleiß der Kontaktflächen (105, 402) die Spulenbremse (100) an der Mitnehmerscheibe (40), die sich erfindungsgemäß immer in der Bandspule (30) selbst zentriert, orientiert, zumal die radiale Beweglichkeit der Spulenbremse (100) in der Führung entsprechend groß gehalten werden kann. Somit ist ein ruhiger Lauf der Bandspule (30) gewährleistet.

Der Neigung der Spulenbremse (100) zu Taumelbewegungen wird dadurch entgegengewirkt, daß vorzugsweise am oberen äußeren Rand der Spulenbremse (100) regelmäßig verteilte oder durchgehende, dünnwandige elastische Elemente (106) angeordnet sind, die sich in der oberen Endlage der Spulenbremse (100) an einer vorzugsweise umlaufenden Rippe (703) des Gehäuseoberteils (702) anlegen.

Selbstverständlich ist das beschriebene Bremssystem nicht nur auf Magnetbandkasseten beschränkt und kann auch für Bandkassetten mit mehr als einer Bandspule verwendet werden.

## Patentansprüche

1. Magnetbandkassette, bestehend aus einem im wesentlichen rechteckigen Gehäuse, mindestens einer darin drehbar gelagerten Bandspule, auf der Magnetband aufgewickelt ist und einem mehrteiligen Bremssystem, wobei mindestens ein erstes Teil (40) im Zentrum der Bandspule und mindestens ein zweites Teil (100) abgefedert an einer Gehäusewand, jeweils verdrehsicher und axial verschiebbar, gelagert ist und wobei das erste Teil (40) geräteseitig von einer Ruhelage in eine Betriebslage angehoben wird und so das zweite Teil (100) gegen die Wirkung der Kraft der Feder (12) aus seiner formschlüssigen Verbindung mit der Bandspule (30) trennt, **dadurch gekennzeichnet, daß** mindestens ein Teil elastische Mittel (106, 408) besitzt, mit denen es wenigstens in der Betriebslage an entsprechenden Führungsmitteln (313a, 313b, 703) der Bandspule und/oder des Kassettengehäuses lösbar fixiert ist.

2. Magnetbandkassette nach Anspruch 1, **dadurch gekennzeichnet, daß** das erste Teil als Mitnehmerscheibe (40), bestehend aus einer kreirunden Mittelplatte (401), deren Querschnitt vorzugsweise kegelförmig ausgebildet ist und wobei die Plattenoberseite im Zentralbereich, der die Kontaktfläche (402) zur Spulenbremse (100) bildet, abgerundet ist und mehreren, vorzugsweise drei, gleichmäßig über den Umfang der Mittelplatte (401) verteilten, sich in axialer Richtung ertstreckenden Füßen (404), ausgebildet ist.

3. Magnetbandkassette nach Anspruch 1, **dadurch gekennzeichnet, daß** das zweite Teil als Spulenbremse (100) ausgebildet ist, wobei die der Mitnehmerscheibe (40) gegenüberliegende Fläche (105), zumindest im Bereich der Kontaktfläche (402) plan ist.

4. Magnetbandkassette nach Anspruch 1, **dadurch gekennzeichnet, daß** vorzugsweise am oberen äußeren Rand der Spulenbremse (100) regelmäßig verteilte oder durchgehende, dünnwandige elastische Elemente (106) angeordnet sind, die sich in der oberen Endlage der Spulenbremse (100) an einer vorzugsweise umlaufenden Rippe (703) des Gehäuseoberteils (702) anlegen.

5. Magnetbandkassette nach Anspruch 2, **dadurch gekennzeichnet, daß** die Füße (404) T-förmig ausgebildet sind und vorzugsweise mittig über radiale Verbindungselemente (407) mit der Mittelplatte (401) verbunden sind.

6. Magnetbandkassette nach Anspruch 5, **dadurch gekennzeichnet, daß** die Verbindungselemente (407) eine Querschnittsschwächung (408) aufweisen.

7. Magnetbandkassette nach Anspruch 1, **dadurch gekennzeichnet, daß** die T-Balken (406) der Füße (404) der Mitnehmerscheibe (40) vorzugsweise an den Enden einander entgegengesetzt, vorzugsweise zur Mittenachse hin und schräg verlaufende, flächige Führungsmittel (410a, 410b) aufweisen, die an entsprechend abgeschrägten Führungsmitteln (313a, 313b) der Bandspule (30) gleitend geführt werden.

8. Magnetbandkassette nach Anspruch 1 bis 7, **dadurch gekennzeichnet, daß** die Spulenbremse (100) und/oder die Mitnehmerscheibe (40) aus einem verschleißbeständigen Kunststoff bestehen.

9. Magnetbandkassette nach Anspruch 8, **dadurch gekennzeichnet, daß** dem verschleißbeständigen Kunststoff zumindest eines Teils (40, 100) mit mindestens einem reibungssenkenden Zusatz versetzt ist.

10. Magnetbandkassette nach Anspruch 1, **dadurch gekennzeichnet, daß** die Summe aus den durch die elastische Fixierung entstehenden Reibungskräften zwischen den Bremsteilen (40, 100), den Führungsmitteln (313a, 313b, 410a, 410b) von Bandspule (30) und Mitnehmerscheibe (40), den Rippen (104) und den Führungen (704), dem elastischen Federelement (106) und der umlaufenden Gehäuserippe (703) von Bremsteil (100) bzw. Kassettengehäuse kleiner ist, als die auf das Bremsteil (100) wirkende minimale Kraft der Feder (12).

## Claims

1. A magnetic-tape cartridge, comprising a substantially rectangular housing, at least one tape reel which is rotatably mounted therein and on which magnetic tape is wound up, and a multipart braking system, at least one first part (40) being mounted in the center of the tape reel and at least a second part (100) being spring-mounted on a housing wall, in each case in a torsionally secure and axially displaceable manner, and said first part (40), on the equipment side, being lifted from a rest position into an operating position and thus releasing said second part (100) against the action of the force of the spring (12), out of its positive connection with the tape reel (30), **characterized in that** at least one part has flexible means (106, 408), by which it is releasably fixed, at least in the operating position, on corresponding guiding means (313a, 313b, 703) of the tape reel and/or of the cartridge housing.

2. The magnetic-tape cartridge as claimed in claim 1, wherein the first part is designed as a driver disk (40), comprising a circular central plate (401), the cross section of which is preferably of a conical design and the upper side of the plate is rounded off in the central region, which forms the contact surface (402) with respect to the reel brake (100), and a plurality of, preferably three, feet (404) evenly distributed over the circumference of the central plate (401) and extending in the axial direction.

3. The magnetic-tape cartridge as claimed in claim 1, wherein the second part is designed as a reel brake (100), the face (105) lying opposite the driver disk (40) being planar, at least in the region of the contact surface (402).

4. The magnetic-tape cartridge as claimed in claim 1, wherein preferably on the upper outer edge of the reel brake (100) there are arranged regularly distributed or continuous, thin-walled flexible elements (106), which in the upper end position of the reel brake (100) come to bear against a preferably peripheral rib (703) of the upper housing part (702).

5. The magnetic-tape cartridge as claimed in claim 2, wherein the feet (404) are of a T-shaped design and are preferably connected centrally to the central plate (401) by means of radial connecting elements (407).

6. The magnetic-tape cartridge as claimed in claim 5, wherein the connecting elements (407) have a cross-sectional reduction (408).

7. The magnetic-tape cartridge as claimed in claim 1, wherein the T-bars (406) of the feet (404) of the driver disk (40) have planar guiding means (410a, 410b), which preferably at the ends run in opposite senses with respect to one another, preferably obliquely toward the center axis, and are guided in a sliding manner on correspondingly beveled guiding means (313a, 313b) of the tape reel (30).

8. The magnetic-tape cartridge as claimed in claims 1 to 7, wherein the reel brake (100) and/or the driver disk (40) consist of a wear-resistant plastic.

9. The magnetic-tape cartridge as claimed in claim 8, wherein the wear-resistant plastic at least of one part (40, 100) is mixed with at least one friction-reducing additive.

10. The magnetic-tape cartridge as claimed in claim 1, wherein the sum of the frictional forces, caused by the flexible fixing, between the braking parts (40, 100), the guiding means (313a, 313b, 410a, 410b) of the tape reel (30) and driver disk (40), the ribs (104) and the guides (704), the flexible spring element (106) and the peripheral housing rib (703) of the braking part (100) or cartridge housing is less than the minimum force of the spring (12) acting on the braking part (100).

## Revendications

1. Cassette de bande magnétique comprenant un boîtier pour l'essentiel rectangulaire, au moins une bobine de bande logée en rotation dans celui-ci, sur laquelle est enroulée une bande magnétique, et un système de freinage en plusieurs parties, au moins une première partie (40) étant logée au centre de la bobine de bande et au moins une deuxième partie (100) étant logée de manière élastique contre une paroi de boîtier, respectivement immobiles en torsion et axialement mobiles, et la première partie (40) côté appareil étant soulevée d'une position de repos dans une position de fonctionnement et séparant ainsi la deuxième partie (100), contre l'effet de la force,du ressort (12), de sa liaison par complémentarité de formes avec la bobine de bande (30), **caractérisée en ce qu'**au moins une partie possède des moyens élastiques (106, 408) par lesquels elle est fixée de manière amovible, du moins dans la position de fonctionnement, à des moyens de guidage (313a, 313b, 703) correspondants de la bobine de bande et/ou du boîtier de cassette.

2. Cassette de bande magnétique selon la revendication 1, **caractérisée en ce que** la première partie présente la forme d'un disque d'entraînement (40) comprenant une plaque centrale circulaire (401) dont la section transversale est de préférence de forme conique, la face supérieure de plaque étant arrondie dans la zone centrale formant la surface de contact (402) avec le frein de bobine (100), ainsi que plusieurs, de préférence trois pieds (404) répartis uniformément à la périphérie de la plaque centrale (401) et s'étendant dans le sens axial.

3. Cassette de bande magnétique selon la revendication 1, **caractérisée en ce que** la deuxième partie présente la forme d'un frein de bobine (100), la surface (105) située en regard du disque d'entraînement (40) étant plane, au moins dans la zone de la surface de contact (402).

4. Cassette de bande magnétique selon la revendication 1, **caractérisée en ce que** des éléments élastiques (106) à paroi mince continus ou répartis uniformément sont disposés de préférence au niveau du bord extérieur supérieur du frein de bobine (100), lesquels dans la position de fin de course supérieure du frein de bobine (100), s'appliquent contre une nervure (703) de préférence périphérique de la partie supérieure de boîtier (702).

5. Cassette de bande magnétique selon la revendication 2, **caractérisée en ce que** les pieds (404) présentent la forme d'un T et sont reliés à la plaque centrale (401), de préférence au centre, par des éléments de liaison radiaux (407).

6. Cassette de bande magnétique selon la revendication 5, **caractérisée en ce que** les éléments de liaison (407) présentent un affaiblissement de section transversale (408).

7. Cassette de bande magnétique selon la revendication 1, **caractérisée en ce que** les branches en T (406) des pieds (404) du disque d'entraînement (40) présentent des moyens de guidage (410a, 410b) plans s'étendant de préférence en direction de l'axe central et de manière inclinée et dont les extrémités sont de préférence opposées les unes aux autres, qui sont guidés en glissement sur des moyens de guidage (313a, 313b) de la bobine de bande (30) présentant une inclinaison correspondante.

8. Cassette de bande magnétique selon la revendication 1 à 7, **caractérisée en ce que** le frein de bobine (100) et/ou le disque d'entraînement (40) sont réalisés en matériau plastique résistant à l'usure.

9. Cassette de bande magnétique selon la revendication 8, **caractérisée en ce que** le matériau plastique résistant à l'usure d'au moins une partie (40, 100) est mélangé à au moins un additif réducteur de frottement.

10. Cassette de bande magnétique selon la revendication 1, **caractérisée en ce que** la somme des forces de frottement résultant de la fixation élastique entre les parties de freinage (40, 100), les moyens de guidage (313a, 313b, 410a, 410b) de la bobine de bande (30) et du disque d'entraînement (40), les nervures (104) et les guidages (704), l'élément de ressort élastique (106) et la nervure de boîtier périphérique (703) de la partie de freinage (100) ou du boîtier de cassette, est plus petite que la force minimale du ressort (12) agissant sur la partie de freinage (100).
